# FASCICULE DE BREVET EUROPEEN

(11) **EP 3 610 119 B1**
(45) Date de publication et mention de la délivrance du brevet: **09.06.2021**
(21) Numéro de dépôt: 18720536.4
(22) Date de dépôt: 13.04.2018
(51) Int. Cl.: E06B 9/72, E06B 9/90

(54) **PROCÉDÉS DE FABRICATION D'UN TAMBOUR ET D'UN FREIN À RESSORT D'UN ACTIONNEUR ÉLECTROMÉCANIQUE, ACTIONNEUR ÉLECTROMÉCANIQUE ET INSTALLATION DOMOTIQUE ASSOCIÉS**
VERFAHREN ZUR HERSTELLUNG EINER TROMMEL UND FEDERBREMSE FÜR EINEN ELEKTROMECHANISCHEN AKTUATOR, ZUGEHÖRIGER ELEKTROMECHANISCHER AKTUATOR UND HEIMAUTOMATIONSANLAGE
METHODS FOR MANUFACTURING A DRUM AND A SPRING BRAKE FOR AN ELECTROMECHANICAL ACTUATOR, ASSOCIATED ELECTROMECHANICAL ACTUATOR AND HOME AUTOMATION INSTALLATION

(30) Priorité: 14.04.2017 FR 1753316
(43) Date de publication de la demande: 19.02.2020
(73) Titulaire: Somfy Activites SA, 74300 Cluses (FR)
(72) Inventeur: HEREDIA, Stéphane, 01220 Divonne Les Bains (FR); BODET, Florian, 74800 La Roche sur Foron (FR); LAGARDE, Eric, 74700 Sallanches (FR); RODRIGUEZ, Antoine, 74190 Le Fayet (FR)
(74) Mandataire: Lavoix
(86) Numéro de dépôt international: PCT/EP2018/059489
(87) Numéro de publication internationale: WO 2018/189353

(56) Documents cités:
- EP-A1- 2 957 705
- DE-A1-102004 035 117
- FR-A1- 2 610 668
- FR-A1- 2 995 001

## Description

La présente invention concerne un procédé de fabrication d'un tambour d'un frein à ressort d'un actionneur électromécanique, un procédé de fabrication d'un frein à ressort d'un actionneur électromécanique comprenant un tel tambour obtenu conformément au procédé de fabrication précité, un actionneur électromécanique pour une installation domotique de fermeture ou de protection solaire comprenant un tel frein à ressort obtenu conformément au procédé de fabrication précité, ainsi qu'une installation domotique de fermeture ou de protection solaire incorporant un tel actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

On connaît déjà le document FR 2 610 668 A1 qui décrit un actionneur électromécanique pour une installation domotique de fermeture ou de protection solaire comprenant un moteur électrique, un réducteur et un frein à ressort.

Le frein à ressort comprend un ressort hélicoïdal, un tambour, un organe d'entrée et un organe de sortie.

Chaque extrémité du ressort hélicoïdal forme une patte s'étendant radialement par rapport à un axe de rotation du frein à ressort.

Le tambour comporte un logement de forme cylindrique. En outre, une surface interne de frottement du logement du tambour est configurée pour coopérer avec au moins une spire du ressort hélicoïdal. De cette manière, au moins une spire du ressort hélicoïdal est contrainte radialement par le logement du tambour.

L'organe d'entrée est entraîné en rotation par le moteur électrique. L'organe d'entrée est configuré pour coopérer avec l'une des pattes du ressort hélicoïdal, de sorte à entraîner en rotation le ressort hélicoïdal autour de l'axe de rotation du frein à ressort dans un premier sens de rotation. Un tel mouvement libère le frein à ressort. L'effort de frottement entre les spires du ressort hélicoïdal et la surface interne du logement du tambour est diminué lors de l'entraînement en rotation du ressort hélicoïdal dans le premier sens de rotation. Autrement dit, ce mouvement tend à diminuer le diamètre de l'enveloppe externe du ressort hélicoïdal et donc à diminuer la contrainte radiale entre le ressort hélicoïdal et la surface interne du logement du tambour.

L'organe de sortie est configuré pour coopérer avec l'une des pattes du ressort hélicoïdal, de sorte à entraîner en rotation le ressort hélicoïdal autour de l'axe de rotation du frein à ressort dans un deuxième sens de rotation, le deuxième sens de rotation étant opposé au premier sens de rotation. Un tel mouvement active le frein à ressort. L'effort de frottement entre les spires du ressort hélicoïdal et la surface interne du logement du tambour est augmenté lors de l'entraînement en rotation du ressort hélicoïdal dans le deuxième sens de rotation. Autrement dit, ce mouvement tend à augmenter le diamètre de l'enveloppe externe du ressort hélicoïdal et donc à augmenter la contrainte radiale entre le ressort hélicoïdal et la surface interne du logement du tambour.

Cependant, cet actionneur électromécanique présente l'inconvénient de générer des bruits, lors du fonctionnement du frein à ressort et, en particulier, lors d'une phase de descente d'un écran d'un dispositif d'occultation. L'apparition des bruits est plus marquée lorsque la température du frein à ressort est élevée, en particulier suite à la mise en œuvre de plusieurs cycles de fonctionnement de l'actionneur électromécanique.

La génération des bruits de fonctionnement du frein à ressort est due à une instabilité de frottement résultant de phases d'adhérence et de phases de glissement d'au moins une spire du frein à ressort par rapport à la surface interne du logement du tambour. Cette instabilité de frottement est générée par le contact métal contre métal d'au moins une spire du frein à ressort sur la surface interne du logement du tambour.

La présente invention a pour but de résoudre les inconvénients précités et de proposer un procédé de fabrication d'un tambour d'un frein à ressort d'un actionneur électromécanique, un procédé de fabrication d'un frein à ressort d'un actionneur électromécanique comprenant un tel tambour, un actionneur électromécanique pour une installation domotique de fermeture ou de protection solaire comprenant un tel frein à ressort, ainsi qu'une installation domotique de fermeture ou de protection solaire comprenant un tel actionneur électromécanique, permettant de réduire les bruits de fonctionnement du frein à ressort et de limiter l'instabilité de frottement entre au moins une spire du frein à ressort et une surface interne de frottement d'un logement du tambour.

A cet égard, la présente invention vise, selon un premier aspect, un procédé de fabrication d'un tambour d'un frein à ressort d'un actionneur électromécanique, le tambour comprenant un logement, le logement étant configuré pour loger au moins un ressort hélicoïdal, un organe d'entrée et un organe de sortie, le logement présentant une surface interne de frottement configurée pour coopérer avec au moins une spire du ressort hélicoïdal.

Selon l'invention, le procédé comprend au moins une étape de traitement de surface mécanique de la surface interne du logement du tambour, l'étape de traitement de surface mécanique de la surface interne du logement du tambour étant une étape de génération de stries sur la surface interne du logement.

Ainsi, la surface interne du logement du tambour comporte des stries obtenues par un traitement de surface mécanique, de sorte à améliorer le guidage d'un lubrifiant, à optimiser la lubrification des zones de contact entre le ressort hélicoïdal et le tambour et à réduire les bruits de fonctionnement du frein à ressort.

De cette manière, la surface interne du logement du tambour présente une texturation spécifique de la surface avec laquelle au moins une spire du ressort hélicoïdal est en contact.

En outre, le traitement de surface mécanique de la surface interne du logement du tambour permet de déterminer avec précision des paramètres de rugosité de la surface interne du logement du tambour, de sorte à garantir le maintien du lubrifiant entre le ressort hélicoïdal et la surface interne du logement du tambour.

Par conséquent, le traitement de surface mécanique de la surface interne du logement du tambour permet de garantir la lubrification entre le ressort hélicoïdal et le tambour et de maîtriser l'interface de contact entre au moins une spire du ressort hélicoïdal et la surface interne du logement du tambour.

Selon une caractéristique préférée de l'invention, chaque strie ménagée au niveau de la surface interne du logement du tambour est orientée d'un angle prédéterminé par rapport à un axe de rotation du tambour.

Selon une autre caractéristique préférée de l'invention, l'étape de traitement de surface mécanique de la surface interne du logement consiste à générer une première série de stries et une deuxième série de stries sur la surface interne du logement. Les stries de la première série sont croisées par rapport aux stries de la deuxième série. Les stries de la première série sont orientées d'un premier angle prédéterminé par rapport à l'axe de rotation du tambour. En outre, les stries de la deuxième série sont orientées d'un deuxième angle prédéterminé par rapport à l'axe de rotation du tambour.

Selon une caractéristique avantageuse de l'invention, le premier angle d'orientation et le deuxième angle d'orientation, respectivement, des stries de la première série et des stries de la deuxième série, par rapport à l'axe de rotation du tambour, sont compris dans une plage s'étendant entre 45° et 85° et préférentiellement de l'ordre de 80°.

Selon une autre caractéristique avantageuse de l'invention, suite à l'étape de traitement de surface mécanique, le procédé comprend une étape de traitement de surface thermochimique du tambour.

Selon une autre caractéristique avantageuse de l'invention, suite à l'étape de traitement de surface thermochimique, le procédé comprend une étape d'application d'un lubrifiant solide sur la surface interne du logement du tambour.

Selon une autre caractéristique avantageuse de l'invention, l'étape d'application du lubrifiant solide est mise en œuvre par projection du lubrifiant sous forme de poudre sur la surface interne du logement du tambour.

La présente invention vise, selon un deuxième aspect, un procédé de fabrication d'un frein à ressort d'un actionneur électromécanique, le frein à ressort comprenant :
- un ressort hélicoïdal,
- un tambour obtenu selon un procédé de fabrication du tambour conforme à l'invention, tel que mentionné précédemment,
   ▪ où le tambour comporte un logement, et
   ▪ où une surface interne de frottement du logement du tambour est configurée pour coopérer avec au moins une spire du ressort hélicoïdal,
- un organe d'entrée, et
- un organe de sortie.

Selon l'invention, le procédé comprend au moins une étape d'assemblage du ressort hélicoïdal, de l'organe d'entrée et de l'organe de sortie à l'intérieur du logement du tambour.

Ainsi, le procédé de fabrication du frein à ressort est mis en œuvre suite à la fabrication du tambour.

La présente invention vise, selon un troisième aspect, un actionneur électromécanique pour une installation domotique de fermeture ou de protection solaire comprenant un moteur électrique, un réducteur, un frein à ressort obtenu selon un procédé de fabrication du frein à ressort conforme à l'invention, tel que mentionné précédemment, le frein à ressort comprenant :
- un ressort hélicoïdal,
- un tambour,
   ▪ où le tambour comporte un logement, et
   ▪ où une surface interne de frottement du logement du tambour est configurée pour coopérer avec au moins une spire du ressort hélicoïdal,
- un organe d'entrée, et
- un organe de sortie.

Selon l'invention, la surface interne du logement du tambour comporte des stries.

Cet actionneur électromécanique présente des caractéristiques et avantages analogues à ceux décrits précédemment en relation avec les procédés de fabrication du tambour et du frein à ressort selon l'invention, tels que mentionnés ci-dessus.

La présente invention vise, selon un quatrième aspect, une installation domotique de fermeture ou de protection solaire comprenant un écran enroulable sur un tube d'enroulement entraîné en rotation par un actionneur électromécanique conforme à l'invention.

Cette installation domotique présente des caractéristiques et avantages analogues à ceux décrits précédemment en relation avec l'actionneur électromécanique selon l'invention, tel que mentionné ci-dessus.

D'autres particularités et avantages de l'invention apparaîtront encore dans la description ci-après.

Aux dessins annexés, donnés à titre d'exemples non limitatifs :
- la figure 1 est une vue schématique en coupe transversale d'une installation domotique conforme à un mode de réalisation de l'invention ;
- la figure 2 est une vue schématique en perspective de l'installation domotique illustrée à la figure 1 ;
- la figure 3 est une vue schématique en coupe partielle de l'installation domotique illustrée à la figure 2, au niveau d'un actionneur électromécanique ;
- la figure 4 est une vue en perspective éclatée schématique d'un frein à ressort de l'actionneur électromécanique illustré à la figure 3 ;
- la figure 5 est une vue schématique en coupe du frein à ressort illustré à la figure 4 ;
- la figure 6 est une vue schématique en perspective du frein à ressort illustré aux figures 4 et 5, où un tambour du frein à ressort a été ôté ; et
- la figure 7 est une vue schématique en coupe du tambour du frein à ressort illustré aux figures 4 à 6.

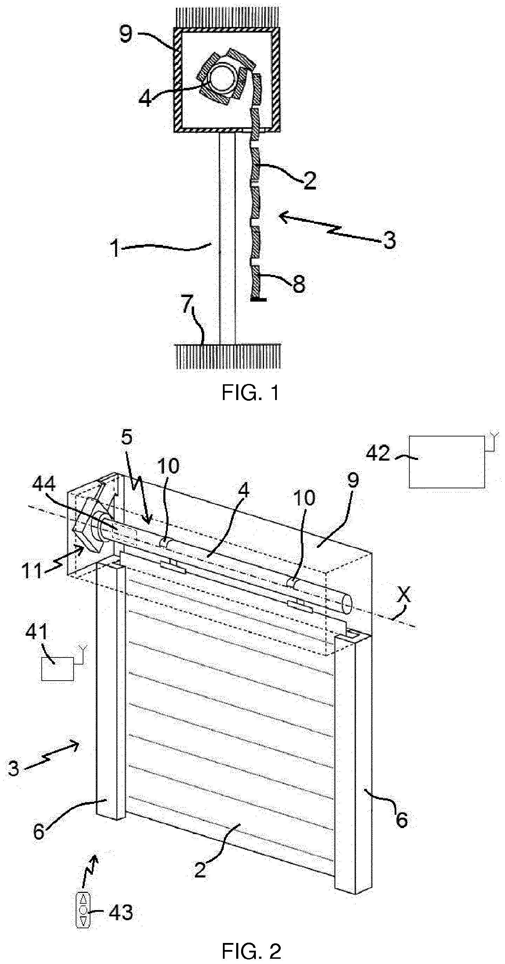

On décrit tout d'abord, en référence aux figures 1 et 2, une installation domotique conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, comme illustré sur les figures 1 et 2, un store en toile ou avec des lames orientables, ou encore un portail roulant. La présente invention s'applique à tous les types de dispositif d'occultation.

On décrit, en référence aux figures 1 et 2, un volet roulant conforme à un mode de réalisation de l'invention.

L'écran 2 du dispositif d'occultation 3 est enroulé sur un tube d'enroulement 4 entraîné par un dispositif d'entraînement motorisé 5 et mobile entre une position enroulée, en particulier haute, et une position déroulée, en particulier basse.

L'écran 2 mobile du dispositif d'occultation 3 est un écran de fermeture, d'occultation et/ou de protection solaire, s'enroulant sur le tube d'enroulement 4 dont le diamètre intérieur est sensiblement supérieur au diamètre externe d'un actionneur électromécanique 11, de sorte que l'actionneur électromécanique 11 puisse être inséré dans le tube d'enroulement 4, lors de l'assemblage du dispositif d'occultation 3.

Le dispositif d'entraînement motorisé 5 comprend l'actionneur électromécanique 11, en particulier de type tubulaire, permettant de mettre en rotation le tube d'enroulement 4, de sorte à dérouler ou enrouler l'écran 2 du dispositif d'occultation 3.

Le dispositif d'occultation 3 comprend le tube d'enroulement 4 pour enrouler l'écran 2. Dans l'état monté, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux glissières latérales 6. Ces lames sont jointives, lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3, et la position basse déroulée correspond à la mise en appui de la lame d'extrémité finale 8 du tablier 2 du volet roulant 3 contre un seuil 7 de l'ouverture 1.

La première lame du tablier 2 du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Le dispositif d'entraînement motorisé 5 est commandé par une unité de commande. L'unité de commande peut être par exemple une unité de commande locale 41, où l'unité de commande locale 41 peut être reliée en liaison filaire ou non filaire avec une unité de commande centrale 42. L'unité de commande centrale 42 peut piloter l'unité de commande locale 41, ainsi que d'autres unités de commande locales similaires et réparties dans le bâtiment.

L'unité de commande centrale 42 peut être en communication avec une station météorologique déportée à l'extérieur du bâtiment, incluant, notamment, un ou plusieurs capteurs pouvant être configurés pour déterminer, par exemple, une température, une luminosité ou encore une vitesse de vent.

Une télécommande 43, pouvant être un type d'unité de commande locale, pourvue d'un clavier de commande et qui comprend des moyens de sélection et d'affichage, permet en outre à un utilisateur d'intervenir sur l'actionneur électromécanique 11, l'unité de commande locale 41 et/ou l'unité de commande centrale 42.

Le dispositif d'entraînement motorisé 5 est, de préférence, configuré pour exécuter les commandes de déroulement ou d'enroulement de l'écran 2 du dispositif d'occultation 3, pouvant être émises, notamment, par la télécommande 43.

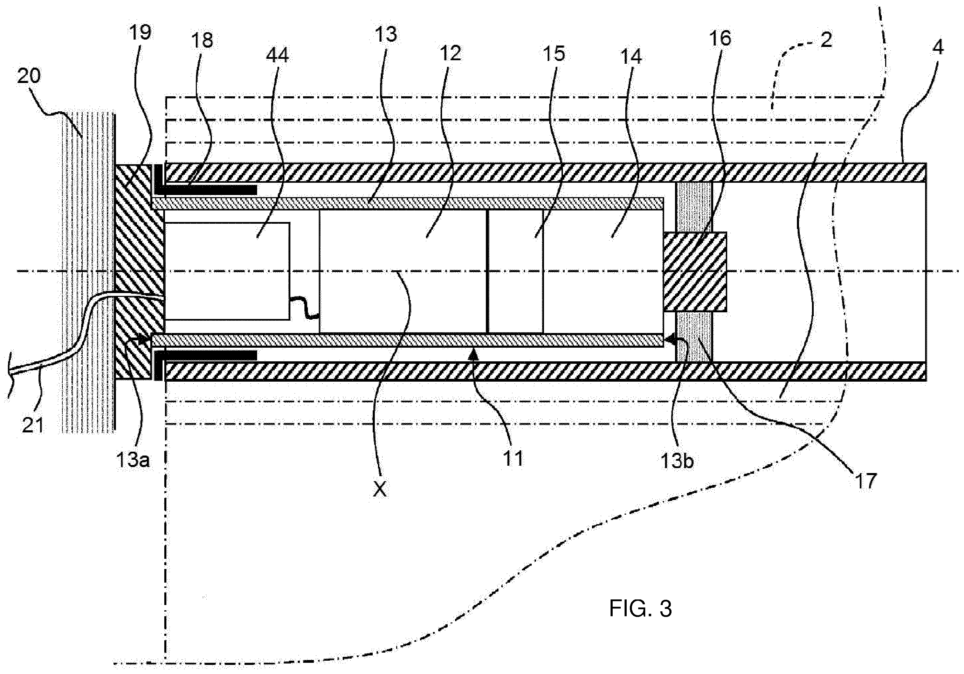

On décrit à présent, plus en détail et en référence à la figure 3, l'actionneur électromécanique 11 appartenant à l'installation domotique des figures 1 et 2.

L'actionneur électromécanique 11 comprend un moteur électrique 12. Le moteur électrique 12 comprend un rotor et un stator, non représentés, positionnés de manière coaxiale autour d'un axe de rotation X, qui est également l'axe de rotation du tube d'enroulement 4 en configuration montée du dispositif d'entraînement motorisé 5.

Des moyens de commande de l'actionneur électromécanique 11, permettant le déplacement de l'écran 2 du dispositif d'occultation 3, comprennent au moins une unité électronique de contrôle 44. Cette unité électronique de contrôle 44 est apte à mettre en fonctionnement le moteur électrique 12 de l'actionneur électromécanique 11 et, en particulier, permettre l'alimentation en énergie électrique du moteur électrique 12.

Ainsi, l'unité électronique de contrôle 44 commande, notamment, le moteur électrique 12, de sorte à ouvrir ou fermer l'écran 2, comme décrit précédemment.

L'unité électronique de contrôle 44 comprend également un module de réception d'ordres, en particulier d'ordres radioélectriques émis par un émetteur d'ordres, tel que la télécommande 43 destinée à commander l'actionneur électromécanique 11 ou l'une des unités de commande locale 41 ou centrale 42.

Le module de réception d'ordres peut également permettre la réception d'ordres transmis par des moyens filaires.

Ici, et tel qu'illustré à la figure 3, l'unité électronique de contrôle 44 est disposée à l'intérieur d'un carter 13 de l'actionneur électromécanique 11.

Les moyens de commande de l'actionneur électromécanique 11 comprennent des moyens matériels et/ou logiciels.

A titre d'exemple nullement limitatif, les moyens matériels peuvent comprendre au moins un microcontrôleur.

L'actionneur électromécanique 11 est alimenté en énergie électrique par un réseau d'alimentation électrique du secteur, ou encore au moyen d'une batterie, pouvant être rechargée, par exemple, par un panneau photovoltaïque. L'actionneur électromécanique 11 permet de déplacer l'écran 2 du dispositif d'occultation 3.

Ici, l'actionneur électromécanique 11 comprend un câble d'alimentation électrique 21 permettant son alimentation en énergie électrique à partir d'un réseau d'alimentation électrique du secteur.

Le carter 13 de l'actionneur électromécanique 11 est, préférentiellement, de forme cylindrique.

Dans un mode de réalisation, le carter 13 est réalisé dans un matériau métallique.

La matière du carter de l'actionneur électromécanique n'est pas limitative et peut être différente. Il peut, en particulier, s'agir d'une matière plastique.

Le tube d'enroulement 4 est entraîné en rotation autour de l'axe de rotation X et du carter 13 de l'actionneur électromécanique 11 soutenu par l'intermédiaire de deux liaisons pivot. La première liaison pivot est réalisée au niveau d'une première extrémité du tube d'enroulement 4 au moyen d'une couronne 18 insérée autour et à une extrémité 13a du carter 13 de l'actionneur électromécanique 11. La couronne 18 permet ainsi de réaliser un palier. La deuxième liaison pivot, non représentée à la figure 3, est réalisée au niveau d'une deuxième extrémité du tube d'enroulement 4.

L'actionneur électromécanique 11 comprend un support de couple 19. Le support de couple 19 est en saillie à une extrémité 13a du carter 13 de l'actionneur électromécanique 11, en particulier l'extrémité 13a du carter 13 recevant la couronne 18. Le support de couple 19 de l'actionneur électromécanique 11 permet ainsi de fixer l'actionneur électromécanique 11 sur un bâti 20, en particulier à une joue du coffre 9.

En outre, le support de couple 19 de l'actionneur électromécanique 11 peut permettre d'obturer l'extrémité 13a du carter 13.

Par ailleurs, le support de couple 19 de l'actionneur électromécanique 11 peut permettre de supporter l'unité électronique de contrôle 44. L'unité électronique de contrôle 44 peut être alimentée en énergie électrique au moyen du câble d'alimentation électrique 21 connecté électriquement au réseau d'alimentation électrique du secteur, ou encore à une batterie.

L'actionneur électromécanique 11 comprend un réducteur 14. Le réducteur 14 comprend au moins un étage de réduction. Ledit au moins un étage de réduction peut être un train d'engrenages de type épicycloïdal.

Le type et le nombre d'étages de réduction du réducteur ne sont nullement limitatifs.

L'actionneur électromécanique 11 comprend un arbre de sortie 16. Une extrémité de l'arbre de sortie 16 est en saillie par rapport au carter 13 de l'actionneur électromécanique 11, en particulier par rapport à une extrémité 13b du carter 13 opposée à son extrémité 13a.

L'arbre de sortie 16 de l'actionneur électromécanique 11 entraîne en rotation un élément de liaison 17 relié au tube d'enroulement 4. L'élément de liaison 17 est réalisé sous la forme d'une roue.

Lors de la mise en fonctionnement de l'actionneur électromécanique 11, le moteur électrique 12 et le réducteur 14 entraînent en rotation l'arbre de sortie 16. En outre, l'arbre de sortie 16 de l'actionneur électromécanique 11 entraîne en rotation le tube d'enroulement 4 par l'intermédiaire de l'élément de liaison 17. Ainsi, le tube d'enroulement 4 entraîne en rotation l'écran 2 du dispositif d'occultation 3 de sorte à ouvrir ou fermer l'ouverture 1.

L'actionneur électromécanique 11 comprend un frein à ressort 15.

Le moteur électrique 12, le réducteur 14 et le frein à ressort 15 sont montés à l'intérieur du carter 13 de l'actionneur électromécanique 11.

Dans le mode de réalisation illustré à la figure 3, le frein à ressort 15 est disposé entre le moteur électrique 12 et le réducteur 14, c'est-à-dire à la sortie du moteur électrique 12.

Dans un autre mode de réalisation, non représenté, où le réducteur 14 comprend une pluralité d'étages de réduction, le frein à ressort 15 est disposé entre deux étages de réduction du réducteur 14.

Dans un autre mode de réalisation, non représenté, le frein à ressort 15 est disposé à la sortie du réducteur 14.

L'actionneur électromécanique 11 peut également comprendre un dispositif de détection de fin de course et/ou d'obstacle, ce dispositif de détection pouvant être mécanique ou électronique.

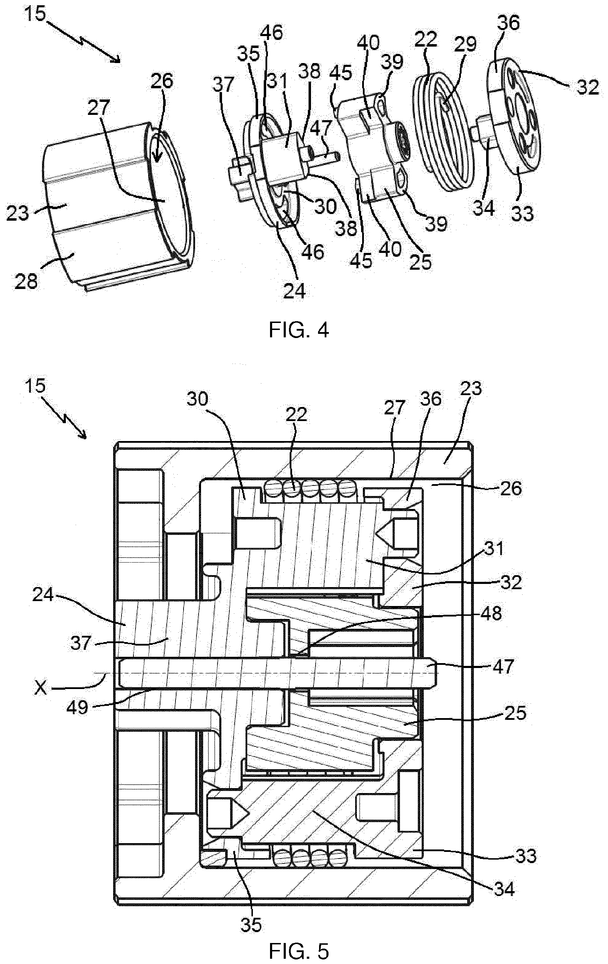

On décrit à présent, en référence aux figures 4 à 7, le frein à ressort 15 de l'actionneur électromécanique 11, illustré à la figure 3 et conforme à un mode de réalisation de l'invention.

Le frein à ressort 15 comprend au moins un ressort hélicoïdal 22, un tambour 23, un organe d'entrée 24 et un organe de sortie 25.

Le tambour 23 est maintenu en position dans le carter 13 de l'actionneur électromécanique 11, en particulier au moyen de nervures 28 ménagées sur la périphérie extérieure du tambour 23 et configurées pour coopérer avec des languettes (non représentées) d'un boîtier du réducteur 14.

Le boîtier du réducteur 14 est également maintenu en position dans le carter 13 de l'actionneur électromécanique 11.

Le tambour 23 comporte un logement 26. Ici, le logement 26 du tambour 23 est de forme cylindrique. En outre, le logement 26 du tambour 23 est débouchant.

Le ressort hélicoïdal 22, l'organe d'entrée 24 et l'organe de sortie 25 sont disposés à l'intérieur du logement 26 du tambour 23, dans la configuration assemblée du frein à ressort 15. L'organe de sortie 25 est disposé en vis-à-vis de l'organe d'entrée 24.

Ici, le ressort hélicoïdal 22 comporte une pluralité de spires. Les spires du ressort hélicoïdal 22 sont centrées sur un axe confondu avec l'axe de rotation X, lorsque le frein à ressort 15 est assemblé puis monté dans l'actionneur électromécanique 11. De même, l'organe d'entrée 24 et l'organe de sortie 25 sont centrés sur un axe confondu avec l'axe de rotation X, lorsque le frein à ressort 15 est assemblé puis monté dans l'actionneur électromécanique 11.

Une surface interne de frottement 27 du logement 26 du tambour 23 est configurée pour coopérer avec au moins une spire du ressort hélicoïdal 22. De cette manière, au moins une spire du ressort hélicoïdal 22 est contrainte radialement par le logement 26 du tambour 23.

Ici, le ressort hélicoïdal 22 est monté serrant à l'intérieur du logement 26 du tambour 23, de sorte à solidariser par friction le ressort hélicoïdal 22 et le tambour 23, lorsque le ressort hélicoïdal 22 est au repos.

Chaque extrémité du ressort hélicoïdal 22 forme une patte 29 s'étendant radialement ou axialement par rapport à l'axe de rotation X du frein à ressort 15.

Ici, le ressort hélicoïdal 22 comporte deux pattes 29, dont une seule est visible à la figure 4.

Dans l'exemple de réalisation illustré à la figure 4, les pattes 29 du ressort hélicoïdal 22 s'étendent radialement par rapport à l'axe de rotation X du frein à ressort 15 et vers l'intérieur du ressort hélicoïdal 22, notamment à partir des spires du ressort hélicoïdal 22 vers l'axe central du ressort hélicoïdal 22.

L'organe d'entrée 24 est entraîné en rotation par le moteur électrique 12.

Ici, et tel qu'illustré aux figures 4 à 7, l'organe d'entrée 24 comprend un arbre 37. L'arbre 37 de l'organe d'entrée 24 permet de recevoir et de transmettre un couple provenant du moteur électrique 12.

Dans l'exemple de réalisation illustré aux figures 4 et 5, l'organe d'entrée 24 comprend une dent d'entraînement 31. La dent d'entraînement 31 de l'organe d'entrée 24 est insérée à l'intérieur du ressort hélicoïdal 22, lorsque le frein à ressort 15 est assemblé.

L'organe d'entrée 24 comprend également un premier plateau 30.

Ici, le premier plateau 30 comprend la dent d'entraînement 31.

La dent d'entraînement 31 de l'organe d'entrée 24 est disposée entre les deux pattes 29 du ressort hélicoïdal 22 et coopère avec l'une ou l'autre des pattes 29 du ressort hélicoïdal 22, selon le sens de rotation d'entraînement généré par le moteur électrique 12.

La dent d'entraînement 31 de l'organe d'entrée 24 comprend deux faces d'entraînement 38. Chaque face d'entraînement 38 de la dent d'entraînement 31 est configurée pour coopérer avec une patte 29 du ressort hélicoïdal 22.

Ici, et tel qu'illustré aux figures 4 et 5, le ressort hélicoïdal 22 et l'organe de sortie 25 sont maintenus en position axialement entre le premier plateau 30 de l'organe d'entrée 24 et un deuxième plateau 32 d'un capot 33.

Ici, et tel qu'illustré à la figure 4, le deuxième plateau 32 du capot 33 comprend une entretoise 34, disposée diamétralement à l'opposé de la dent d'entraînement 31 du première plateau 30 par rapport à l'axe de rotation X, lorsque le frein à ressort 15 est assemblé. L'entretoise 34 du deuxième plateau 32 du capot 33 permet ainsi de maintenir un écartement axial entre les premier et deuxième plateaux 30, 32.

Dans un autre mode de réalisation, non représenté, le premier plateau 30 de l'organe d'entrée 24 peut comprendre l'entretoise 34.

Ici et tel qu'illustré aux figures 4 et 5, les premier et deuxième plateaux 30, 32 comprennent chacun une collerette périphérique 35, 36. Les deux collerettes périphériques 35, 36 sont disposées en vis-à-vis l'une de l'autre suivant l'axe de rotation X du frein à ressort 15.

Les premier et deuxième plateaux 30, 32 sont solidaires en rotation autour de l'axe de rotation X du frein à ressort 15.

Dans un mode de réalisation, les premier et deuxième plateaux 30, 32 peuvent être maintenus solidaires en rotation autour de l'axe de rotation X du frein à ressort 15 par simple emboîtement.

Dans un autre mode de réalisation, les premier et deuxième plateaux 30, 32 peuvent être maintenus solidaires en rotation autour de l'axe de rotation X du frein à ressort 15 par fixation au moyen d'un élément de fixation, tel qu'une vis de fixation.

L'organe de sortie 25 est relié à l'écran 2 du dispositif d'occultation 3.

Dans l'exemple de réalisation illustré aux figures 4 et 5, l'organe de sortie 25 comprend deux oreilles 39. Les oreilles 39 de l'organe de sortie 25 sont insérées à l'intérieur du ressort hélicoïdal 22, lorsque le frein à ressort 15 est assemblé.

Les oreilles 39 de l'organe de sortie 25 comprennent respectivement un évidement 40. L'évidement 40 de chacune des oreilles 39 de l'organe de sortie 25 est configuré pour coopérer avec l'une des pattes 29 du ressort hélicoïdal 22.

Les oreilles 39 de l'organe de sortie 25 comprennent, en outre, respectivement un élément en saillie 45. L'élément en saillie 45 de chacune des oreilles 39 de l'organe de sortie 25 s'étend parallèlement à l'axe de rotation X du frein à ressort 15, et en particulier vers l'organe d'entrée 24, lorsque le frein à ressort 15 est assemblé. L'élément en saillie 45 de chacune des oreilles 39 de l'organe de sortie 25 est configuré pour coopérer avec une lumière 46 de l'organe d'entrée 24, lorsque le frein à ressort 15 est assemblé.

Dans un mode de réalisation, la face périphérique de l'élément en saillie 45 de l'une des oreilles 39 de l'organe de sortie 25 peut être mise en contact avec le contour de la lumière 46 correspondante de l'organe d'entrée 24, lorsque l'une des faces d'entraînement 38 de la dent d'entraînement 31 de l'organe d'entrée 24 est en contact avec la face de l'oreille 39 correspondante de l'organe de sortie 25.

Ici, et tel qu'illustré aux figures 4 et 5, l'organe de sortie 25 est centré par rapport à l'organe d'entrée 24 au moyen d'un axe 47. L'axe 47 est inséré, d'une part, dans un alésage 48 de l'organe de sortie 25 et, d'autre part, dans un alésage 49 de l'organe d'entrée 24.

L'organe d'entrée 24, en particulier la dent d'entraînement 31, est configurée pour coopérer avec au moins l'une des pattes 29 du ressort hélicoïdal 22, de sorte à entraîner en rotation le ressort hélicoïdal 22 autour de l'axe de rotation X du frein à ressort 15 dans un premier sens de rotation.

Un tel mouvement libère le frein à ressort 15.

L'effort de frottement entre au moins une spire du ressort hélicoïdal 22 et la surface interne 27 du logement 26 du tambour 23 est diminué lors de l'entraînement en rotation du ressort hélicoïdal 22 dans le premier sens de rotation.

Autrement dit, ce mouvement tend à diminuer le diamètre de l'enveloppe externe du ressort hélicoïdal 22 et donc à diminuer la contrainte radiale entre le ressort hélicoïdal 22 et la surface interne 27 du logement 26 du tambour 23.

Ainsi, le mouvement généré par le moteur électrique 12 peut être transmis de l'organe d'entrée 24 à l'organe de sortie 25.

L'enveloppe externe du ressort hélicoïdal 22 est définie par les génératrices externes des spires du ressort hélicoïdal 22.

L'organe de sortie 25, en particulier l'une des oreilles 39, est configuré pour coopérer avec au moins l'une des pattes 29 du ressort hélicoïdal 22, de sorte à entraîner en rotation le ressort hélicoïdal 22 autour de l'axe de rotation X du frein à ressort 15 dans un deuxième sens de rotation.

Un tel mouvement active le frein à ressort 15, c'est-à-dire tend à bloquer ou à freiner la rotation du ressort hélicoïdal 22 à l'intérieur du logement 26 du tambour rotatif 23.

L'effort de frottement entre au moins une spire du ressort hélicoïdal 22 et la surface interne 27 du logement 26 du tambour 23 est augmenté lors de l'entraînement en rotation du ressort hélicoïdal 22 dans le deuxième sens de rotation.

Autrement dit, ce mouvement tend à augmenter le diamètre de l'enveloppe externe du ressort hélicoïdal 22, en particulier par le rapprochement des pattes 29 du ressort hélicoïdal 22, et donc à augmenter la contrainte radiale entre le ressort hélicoïdal 22 et la surface interne 27 du logement 26 du tambour 23.

Avantageusement, le frein à ressort 15 comprend un premier lubrifiant, non représenté, disposé entre le ressort hélicoïdal 22 et la surface interne 27 du logement 26 du tambour 23. Le premier lubrifiant est, préférentiellement, de la graisse.

Ici, dans la configuration assemblée du frein à ressort 15 de l'actionneur électromécanique 11, le frottement d'au moins une spire du ressort hélicoïdal 22 contre la surface interne 27 du logement 26 du tambour 23 est une application dite « chargée ».

L'application dite « chargée » signifie, notamment, que la pression de contact générée par le ressort hélicoïdal 22 contre la surface interne 27 du logement 26 du tambour 23 est élevée.

A titre d'exemple nullement limitatif, la pression de contact générée par le ressort hélicoïdal 22 contre la surface interne 27 du logement 26 du tambour 23 peut être supérieure à 1 GPa.

La valeur de la pression de contact générée par le ressort hélicoïdal 22 contre la surface interne 27 du logement 26 du tambour 23 est due, notamment, à la forme de la section d'un fil formant le ressort hélicoïdal 22.

Dans le cas où la section du fil formant le ressort hélicoïdal 22 est ronde, la surface de contact entre chaque spire du ressort hélicoïdal 22 et la surface interne 27 du logement 26 du tambour 23 est une ligne. Par conséquent, la surface de contact entre chaque spire du ressort hélicoïdal 22 et la surface interne 27 du logement 26 du tambour 23 est faible pour transmettre un effort entre le ressort hélicoïdal 22 et le tambour 23.

En outre, l'application dite « chargée » signifie, éventuellement, que la vitesse linéaire de frottement entre au moins une spire du ressort hélicoïdal 22 et la surface interne 27 du logement 26 du tambour 23 est élevée.

A titre d'exemple nullement limitatif, la vitesse linéaire de frottement entre le ressort hélicoïdal 22 et la surface interne 27 du logement 26 du tambour 23 peut être de l'ordre de 0,6m/s.

On décrit à présent un procédé de fabrication du tambour 23 du frein à ressort 15, illustré aux figures 4 à 7, conforme à un mode de réalisation de l'invention.

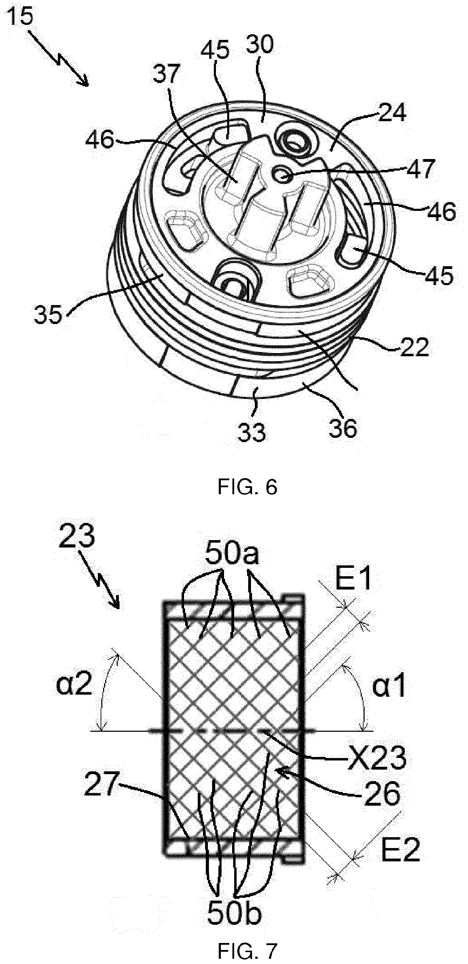

Le procédé de fabrication du tambour 23 comprend une étape de traitement de surface mécanique de la surface interne 27 du logement 26 du tambour 23. L'étape de traitement de surface mécanique de la surface interne 27 du logement 26 du tambour 23 est une étape de génération de stries 50a, 50b sur la surface interne 27 du logement 26, comme illustré à la figure 7. Pour la clarté du dessin, ces stries ne sont pas représentées aux figures 4 et 5.

Ainsi, la surface interne 27 du logement 26 du tambour 23 comporte des stries 50a, 50b obtenues par un traitement de surface mécanique, de sorte à améliorer le guidage du premier lubrifiant, à optimiser la lubrification des zones de contact entre le ressort hélicoïdal 22 et le tambour 23 et à réduire les bruits de fonctionnement du frein à ressort 15.

De cette manière, la surface interne 27 du logement 26 du tambour 23 présente une texturation spécifique de la surface avec laquelle au moins une spire du ressort hélicoïdal 22 est en contact.

En outre, le traitement de surface mécanique de la surface interne 27 du logement 26 du tambour 23 permet de déterminer avec précision des paramètres de rugosité de la surface interne 27 du logement 26 du tambour 23, de sorte à garantir le maintien du premier lubrifiant entre le ressort hélicoïdal 22 et la surface interne 27 du logement 26 du tambour 23.

Les paramètres de rugosité de la surface interne 27 du logement 26 du tambour 23 sont, notamment, les paramètres dénommés Rz, Rk, Rpk et Rvk. Le paramètre Rz correspond à la hauteur maximale d'un profil de rugosité de la surface interne 27 du logement 26 du tambour 23, c'est-à-dire à l'écart entre le pic le plus haut et la vallée la plus profonde. Le paramètre Rk correspond à la profondeur du profil de rugosité écrêté, c'est-à-dire une limite inférieure et une limite supérieure de la rugosité moyenne. Le paramètre Rpk correspond à la hauteur moyenne des pics s'élevant au-dessus du profil de rugosité écrêté. Le paramètre Rvk correspond à la profondeur moyenne des vallées se situant au-dessous du profil de rugosité écrêté.

Un pic du profil de rugosité peut également être appelé une saillie. Une vallée du profil de rugosité peut également être appelée un creux.

Ici, le traitement de surface mécanique de la surface interne 27 du logement 26 du tambour 23 est mis en œuvre de sorte à obtenir des vallées profondes, c'est-à-dire une valeur du paramètre Rvk grande, et des pics de faible hauteur, c'est-à-dire une valeur du paramètre Rpk petite, de sorte à garantir la plus grande portance du ressort hélicoïdal 22 par le logement 26 du tambour 23.

En pratique, les paramètres de rugosité de la surface interne 27 du logement 26 du tambour 23 sont dépendants des caractéristiques du premier lubrifiant disposé entre le ressort hélicoïdal 22 et la surface interne 27 du logement 26 du tambour 23.

A titre d'exemple nullement limitatif, les stries 50a, 50b formées au niveau de la surface interne 27 du logement 26 du tambour 23 présentent les valeurs seuils suivantes : Rz inférieur à 6 micromètres, Rk compris entre 0,3 micromètre et 1,5 micromètre, Rpk inférieur à 0,6 micromètre et Rvk supérieur à 0,5 micromètre, voire de l'ordre de 2 micromètres.

Avantageusement, le traitement de surface mécanique de la surface interne 27 du logement 26 du tambour 23 correspond à un traitement de surface mécanique appelé « émerillage ». La technique de l'émerillage consiste à générer une texturation d'une surface, dans le cas présent de la surface interne 27 du logement 26 du tambour 23.

Le traitement de surface mécanique de la surface interne 27 du logement 26 du tambour 23 réalisé selon la technique de l'émerillage permet d'obtenir un état de surface maîtrisé comportant des vallées profondes et des pics présentant une hauteur limitée.

Ainsi, lors du frottement d'au moins une spire du ressort hélicoïdal 22 sur la surface interne 27 du logement 26 du tambour 23, la limitation de pics permet de garantir un mouvement du ressort hélicoïdal 22 par rapport au tambour 23 en évitant les à-coups.

En outre, lorsqu'au moins une spire du ressort hélicoïdal 22 frotte sur la surface interne 27 du logement 26 du tambour 23, la profondeur des vallées permet de conserver une réserve du premier lubrifiant entre le ressort hélicoïdal 22 et la surface interne 27 du logement 26 du tambour 23, bien que la pression de contact générée par le ressort hélicoïdal 22 contre la surface interne 27 du logement 26 du tambour 23 est élevée.

Préférentiellement, chaque strie 50a, 50b ménagée au niveau de la surface interne 27 du logement 26 du tambour 23 est orientée d'un angle prédéterminé α1, α2 par rapport à un axe de rotation X23 du tambour 23. Cet axe de rotation X23 est confondu avec l'axe de rotation X, dans la configuration assemblée du frein à ressort 15.

Avantageusement, l'angle α1, α2 d'orientation des stries 50a, 50b ménagées au niveau de la surface 27 du logement 26 du tambour 23 est déterminé en fonction des paramètres de rugosité de la surface interne 27 du logement 26 du tambour 23.

En pratique, l'angle α1, α2 d'orientation des stries 50a, 50b est dépendant des caractéristiques du premier lubrifiant disposé entre le ressort hélicoïdal 22 et la surface interne 27 du logement 26 du tambour 23.

Avantageusement, l'angle α1, α2 d'orientation des stries 50a, 50b ménagées au niveau de la surface interne 27 du logement 26 du tambour 23 est déterminé par rapport au sens de frottement d'au moins une spire du ressort hélicoïdal 22 par rapport à la surface interne 27 du logement 26 du tambour 23.

Dans un exemple de réalisation préféré, illustré à la figure 7, l'étape de traitement de surface mécanique de la surface interne 27 du logement 26 consiste à générer une première série de stries 50a et une deuxième série de stries 50b sur la surface interne 27 du logement 26. Les stries 50a de la première série sont croisées par rapport aux stries 50b de la deuxième série. Les stries 50a de la première série sont orientées d'un premier angle prédéterminé α1 par rapport à l'axe de rotation X23 du tambour 23. En outre, les stries 50b de la deuxième série sont orientées d'un deuxième angle prédéterminé α2 par rapport à l'axe de rotation X23 du tambour 23.

Ainsi, l'orientation des stries 50a de la première série par rapport à l'axe de rotation X23 du tambour 23 permet de guider le premier lubrifiant au niveau des zones de contact entre le ressort hélicoïdal 22 et la surface interne 27 du logement 26 du tambour 23, selon un premier sens de rotation du ressort hélicoïdal 22 par rapport au tambour 23 autour de l'axe de rotation X.

En outre, l'orientation des stries 50b de la deuxième série par rapport à l'axe de rotation X23 du tambour 23 permet de guider le premier lubrifiant au niveau des zones de contact entre le ressort hélicoïdal 22 et la surface interne 27 du logement 26 du tambour 23, selon un deuxième sens de rotation du ressort hélicoïdal 22 par rapport au tambour 23 autour de l'axe de rotation X.

Le premier sens de rotation du ressort hélicoïdal 22 par rapport au tambour 23 est opposé au deuxième sens de rotation du ressort hélicoïdal 22 par rapport au tambour 23.

De cette manière, les stries 50a de la première série et les stries 50b de la deuxième série permettent un fonctionnement du frein à ressort 15 selon les premier et deuxième sens de rotation du ressort hélicoïdal 22 par rapport au tambour 23.

Par ailleurs, le croisement des stries 50a de la première série avec les stries 50b de la deuxième série permettent de guider le premier lubrifiant tout autour du ressort hélicoïdal 22, lors du frottement d'au moins une spire du ressort hélicoïdal 22 sur la surface interne 27 du logement 26 du tambour 23.

De cette manière, lors de l'entraînement en rotation du ressort hélicoïdal 22 à l'intérieur du tambour 23, l'ensemble des stries 50a, 50b participent à la lubrification des zones de contact entre le ressort hélicoïdal 22 et le tambour 23, puisque les stries 50a, 50b étalent le premier lubrifiant sur toute la surface interne 27 du logement 26 du tambour 23, plutôt que de le déplacer dans une direction unique donnée.

Avantageusement, le traitement de surface mécanique de la surface interne 27 générant des stries 50a, 50b est effectué au moyen d'un élément d'abrasion, en particulier une pierre abrasive.

En pratique, le premier angle α1 d'orientation des stries 50a de la première série est opposé au deuxième angle α2 d'orientation des stries 50b de la deuxième série.

Dans l'exemple de réalisation illustré à la figure 7, la valeur du premier angle α1 d'orientation des stries 50a de la première série est égal à la valeur du deuxième angle α2 d'orientation des stries 50b de la deuxième série.

En variante, non représentée, la valeur du premier angle α1 d'orientation des stries 50a de la première série est différente de la valeur du deuxième angle α2 d'orientation des stries 50b de la deuxième série.

Avantageusement, le premier angle α1 d'orientation et le deuxième angle α2 d'orientation, respectivement, des stries 50a de la première série et des stries 50b de la deuxième série par rapport à l'axe de rotation X23 du tambour 23, sont compris dans une plage s'étendant entre 45° et 85° et préférentiellement de l'ordre de 80°.

Avantageusement, les stries 50a de la première série sont parallèles les unes par rapport aux autres. En outre, les stries 50b de la deuxième série sont parallèles les unes aux autres.

Avantageusement, les stries 50a de la première série sont espacées l'une par rapport à l'autre d'un écartement prédéterminé E1.

Ici, l'écartement prédéterminé E1 entre deux stries 50a adjacentes de la première série est constant pour chaque couple de stries 50a de la première série.

En outre, les stries 50b de la deuxième série sont espacées l'une par rapport à l'autre d'un écartement prédéterminé E2.

Ici, l'écartement prédéterminé E2 entre deux stries 50b adjacentes de la deuxième série est constant pour chaque couple de stries 50b de la deuxième série.

Dans l'exemple de réalisation illustré à la figure 7, l'écartement prédéterminé E1 entre deux stries 50a adjacentes de la première série est identique à l'écartement prédéterminé E2 entre deux stries 50b adjacentes de la deuxième série.

En variante, non représentée, l'écartement prédéterminé E1 entre deux stries 50a adjacentes de la première série est différent de l'écartement prédéterminé E2 entre deux stries 50b adjacentes de la deuxième série.

En pratique, préalablement à l'étape de traitement de surface mécanique, le procédé de fabrication du tambour 23 comprend une étape d'obtention du tambour 23.

Avantageusement, l'étape d'obtention du tambour 23 comprend une sous-étape de moulage du tambour 23 et, éventuellement, une sous-étape d'usinage du tambour 23 et, en particulier, de la surface interne 27 du logement 26 du tambour 23.

Avantageusement, suite à l'étape de traitement de surface mécanique, le procédé comprend une étape de traitement de surface thermochimique du tambour 23.

Ainsi, le traitement de surface thermochimique du tambour 23 permet d'augmenter la dureté de la surface du tambour 23.

De cette manière, le durcissement de la surface du tambour 23 et, en particulier de la surface interne 27 du logement 26 du tambour 23, permet de limiter la déformation et l'usure de la surface interne 27, lors du frottement d'au moins une spire du ressort hélicoïdal 22 sur cette surface interne 27.

Par conséquent, le durcissement de la surface interne 27 du logement 26 du tambour 23 permet de limiter l'abrasion du tambour 23 et donc de limiter la présence de résidus provenant du tambour 23 piégés dans le premier lubrifiant disposé entre le ressort hélicoïdal 22 et la surface interne 27, de tels résidus pouvant engendrer une usure prématurée du ressort hélicoïdal 22 et du tambour 23.

Le traitement de surface thermochimique du tambour 23 permet de garantir un niveau de dureté et un niveau de tenue à l'abrasion de la surface interne 27 du logement 26 du tambour 23, de sorte à éviter la formation de sillons engendrés par le frottement d'au moins une spire du ressort hélicoïdal 22 sur la surface interne 27 du logement 26 du tambour 23.

De cette manière, le traitement de surface thermochimique du tambour 23 permet de garantir une meilleure stabilité de frottement d'au moins une spire du ressort hélicoïdal 22 sur la surface interne 27 du logement 26 du tambour 23, lors du frottement d'au moins une spire du ressort hélicoïdal 22 sur cette surface interne 27.

En outre, le durcissement de la surface interne 27 du logement 26 du tambour 23 permet d'éviter l'aplanissement des stries 50a, 50b ménagées au niveau de la surface interne 27 du logement 26 du tambour 23, ainsi que d'éviter le polissage de la surface interne 27, un tel aplanissement et/ou un tel polissage pouvant engendrer un comportement instable du frein à ressort 15 et l'apparition de bruit, lors du fonctionnement du frein à ressort 15.

Par ailleurs, le traitement de surface thermochimique du tambour 23 permet d'apporter une couche lubrifiante additionnelle au niveau de la surface du tambour 23 et, en particulier, de la surface interne 27 du logement 26 du tambour 23. Une telle couche lubrifiante additionnelle générée par le traitement de surface thermochimique du tambour 23 contribue à l'amélioration des conditions de fonctionnement du frein à ressort 15.

Avantageusement, le traitement de surface thermochimique du tambour 23 est un traitement de surface thermochimique par diffusion, en particulier d'éléments non métalliques. Un tel traitement de surface thermochimique peut correspondre, par exemple, à un traitement de surface thermochimique appelé « nitrocarburation » ou à un traitement de surface thermochimique appelé « nitruration ».

Avantageusement, suite à l'étape de traitement de surface thermochimique, le procédé comprend une étape d'application d'un lubrifiant solide, non représenté, également appelé deuxième lubrifiant, sur la surface interne 27 du logement 26 du tambour 23.

Ici, le lubrifiant solide est déposé sur la surface interne 27 du logement 26 du tambour 23.

Ainsi, lors du frottement d'au moins une spire du ressort hélicoïdal 22 sur la surface interne 27 du logement 26 du tambour 23, le lubrifiant solide appliqué sur cette surface interne 27 est usé par abrasion.

De cette manière, les résidus de lubrifiant solide générés par le frottement du ressort hélicoïdal 22 sur la surface interne 27 du logement 26 du tambour 23 sont introduits dans les stries 50a, 50b ménagées au niveau de la surface interne 27 du logement 26 du tambour 23.

Par conséquent, ces résidus de lubrifiant solide permettent de continuer à lubrifier les zones de contact entre le ressort hélicoïdal 22 et la surface interne 27 du logement 26 du tambour 23, lors de l'entraînement en rotation du ressort hélicoïdal 22 à l'intérieur du tambour 26.

En outre, les résidus de lubrifiant solide, générés par le frottement d'au moins une spire du ressort hélicoïdal 22 sur la surface interne 27 du logement 26 du tambour 23, sont mélangés au premier lubrifiant, sous forme de graisse, disposé entre le ressort hélicoïdal 22 et la surface interne 27 du logement 26 du tambour 23. De tels résidus de lubrifiant solide générés par le frottement du ressort hélicoïdal 22 sur la surface interne 27 du logement 26 du tambour 23 contribuent à l'amélioration des conditions de fonctionnement du frein à ressort 15.

A titre d'exemple nullement limitatif, le lubrifiant solide peut être du bisulfure de molybdène ou du bisulfure de tungstène.

L'application du lubrifiant solide sur la surface interne 27 du logement 26 du tambour 23 présente l'avantage qu'une telle lubrification est indépendante des conditions environnementales auxquelles sont exposés le ressort hélicoïdal 22 et le tambour 23. Les conditions environnementales sont, notamment, la température et l'humidité.

Avantageusement, l'étape d'application du lubrifiant solide est mise en œuvre par projection du deuxième lubrifiant sous forme de poudre sur la surface interne 27 du logement 26 du tambour 23.

Avantageusement, suite à l'étape d'application du lubrifiant solide, le procédé comprend une étape de séchage du lubrifiant solide, de sorte à garantir la prise du lubrifiant solide sur la surface interne 27 du logement 26 du tambour 23.

L'étape de séchage du lubrifiant solide peut être mise en œuvre, par exemple, par une phase d'attente ou par une phase de cuisson dans une étuve.

On décrit à présent un procédé de fabrication du ressort hélicoïdal 22 du frein à ressort 15, illustré aux figures 4 à 7, conforme à un mode de réalisation de l'invention.

Le procédé de fabrication du ressort hélicoïdal 22 comprend une étape d'obtention du ressort hélicoïdal 22.

Avantageusement, l'étape d'obtention du ressort hélicoïdal 22 comprend une sous-étape de conformation d'un fil brut, à partir duquel le ressort hélicoïdal 22 est formé. La sous-étape de conformation du fil brut est mise en œuvre par enroulement du fil brut selon une pluralité de spires.

Suite à la sous-étape de conformation, le procédé comprend une sous-étape de découpe du fil brut, de sorte à détacher les spires formant le ressort hélicoïdal 22 par rapport au fil brut.

Suite à la sous-étape de découpe, le procédé comprend une sous-étape de conformation d'une première patte 29 du ressort hélicoïdal 22, à une première extrémité du fil découpé formant les spires du ressort hélicoïdal 22, et une sous-étape de conformation d'une deuxième patte 29 du ressort hélicoïdal 22, à une deuxième extrémité de ce fil découpé. La première extrémité du fil découpé formant les spires du ressort hélicoïdal 22 est opposée à la deuxième extrémité du fil découpé.

Avantageusement, suite à l'étape d'obtention du ressort hélicoïdal 22, le procédé comprend une étape de galetage de la surface extérieure des spires du ressort hélicoïdal 22.

Ainsi, le galetage de la surface extérieure des spires du ressort hélicoïdal 22 permet de modifier la section du fil formant le ressort hélicoïdal 22 et, en particulier, d'aplatir la surface extérieure du ressort hélicoïdal 22.

De cette manière, le galetage de la surface extérieure des spires du ressort hélicoïdal 22 permet de diminuer la pression de contact d'au moins une spire du ressort hélicoïdal 22 sur la surface interne 27 du logement 26 du tambour 23, lors du fonctionnement du frein à ressort 15.

La diminution de pression de contact d'au moins une spire du ressort hélicoïdal 22 sur la surface interne 27 du logement 26 du tambour 23 est due à l'augmentation de surface d'au moins une spire du ressort hélicoïdal 22 sur la surface interne 27.

Par conséquent, le galetage de la surface extérieure des spires du ressort hélicoïdal 22 permet de réduire les bruits de fonctionnement du frein à ressort 15, puisqu'une diminution de la pression de contact d'au moins une spire du ressort hélicoïdal 22 sur la surface interne 27 du logement 26 du tambour 23, lors du fonctionnement du frein à ressort 15, facilite la lubrification des zones de contact entre le ressort hélicoïdal 22 et la surface interne 27 du logement 26 du tambour 23.

Préférentiellement, suite à l'étape de galetage, le procédé comprend une étape de traitement thermochimique de la surface du ressort hélicoïdal 22.

Avantageusement, le traitement de surface thermochimique de la surface du ressort hélicoïdal 22 est un traitement de surface thermochimique appelé « DLC » (acronyme de l'expression anglo-saxonne Diamond Like Carbon).

La technique appelée « DLC » consiste à mettre en œuvre un dépôt en couche mince de carbone amorphe, par exemple d'une épaisseur de trois micromètres.

Ainsi, la technique appelée « DLC » permet d'augmenter le niveau de dureté de la surface du ressort hélicoïdal 22 et d'améliorer la lubrification de la surface du ressort hélicoïdal 22.

De cette manière, le niveau de dureté élevé de la surface du ressort hélicoïdal 22 permet de résister au cisaillement induit par le fonctionnement du frein à ressort 15, de limiter l'usure du ressort hélicoïdal 22 et, par conséquent, d'éviter la génération de particules abrasives.

En outre, le traitement de surface thermochimique du ressort hélicoïdal 22 permet de garantir une meilleure stabilité de frottement d'au moins une spire du ressort hélicoïdal 22 sur la surface interne 27 du logement 26 du tambour 23, lors du frottement d'au moins une spire du ressort hélicoïdal 22 sur la surface interne 27.

En outre, le durcissement de la surface du ressort hélicoïdal 22 permet d'éviter le polissage de la surface du ressort hélicoïdal 22, ce polissage pouvant engendrer un comportement instable du frein à ressort 15 et l'apparition de bruit, lors du fonctionnement du frein à ressort 15.

Par ailleurs, la technique appelée « DLC » permet d'obtenir un faible coefficient de frottement au niveau de la surface du ressort hélicoïdal 22, de sorte à favoriser un comportement stable du frein à ressort 15 et à limiter l'apparition de bruit, lors du fonctionnement du frein à ressort 15.

En variante, suite à l'étape de galetage, le procédé comprend une étape de traitement de surface mécanique de la surface du ressort hélicoïdal 22.

Avantageusement, le traitement de surface mécanique de la surface du ressort hélicoïdal 22 est un traitement de surface mécanique appelé « tribofinition ».

La technique dite de « tribofinition » a pour effet de générer des déformations aléatoires de la surface du ressort hélicoïdal 22, de sorte à favoriser la lubrification du ressort hélicoïdal 22 et la création de réserves de premier lubrifiant au niveau des zones de contact entre le ressort hélicoïdal 22 et la surface interne 27 du logement 26 du tambour 23.

Préférentiellement, l'étape de traitement de surface mécanique de la surface du ressort hélicoïdal 22, en particulier dite de « tribofinition », est mise en œuvre en remplacement de l'étape de traitement thermochimique de la surface du ressort hélicoïdal 22, en particulier appelée « DLC ».

En variante, suite à l'étape de galetage, le procédé comprend une étape de traitement de surface chimique de la surface du ressort hélicoïdal 22.

Avantageusement, le traitement de surface chimique du ressort hélicoïdal 22 est un traitement de surface chimique par dépôt. Un tel traitement de surface chimique peut correspondre, par exemple, à un traitement de surface chimique appelé « NiP HP » (acronyme de l'expression Nickel-Phosphore Haut Phosphore).

La technique appelée « NiP HP » consiste à mettre en œuvre un dépôt en couche de Nickel et de Phosphore, par exemple d'une épaisseur de vingt micromètres.

Ainsi, la technique appelée « NiP HP » permet de diminuer la rugosité de la surface du ressort hélicoïdal 22 et, par conséquent, de masquer les rainures liées à l'étape d'obtention du ressort hélicoïdal 22.

En outre, la technique appelée « NiP HP » permet d'augmenter le niveau de dureté de la surface du ressort hélicoïdal 22 et d'améliorer la lubrification de la surface du ressort hélicoïdal 22.

Préférentiellement, l'étape de traitement de surface chimique de la surface du ressort hélicoïdal 22, en particulier appelée « NiP HP », est mise en œuvre en remplacement de l'étape de traitement thermochimique de la surface du ressort hélicoïdal 22, en particulier appelée « DLC ».

On décrit à présent un procédé de fabrication du frein à ressort 15, illustré aux figures 4 à 7, conforme à un mode de réalisation de l'invention.

Le procédé de fabrication du frein à ressort 15 comprend une étape d'assemblage du ressort hélicoïdal 22, obtenu de préférence selon le procédé de fabrication décrit précédemment, de l'organe d'entrée 24 et de l'organe de sortie 25 à l'intérieur du logement 26 du tambour 23, obtenu selon le procédé de fabrication décrit précédemment.

Grâce à la présente invention, le procédé comprend au moins une étape de traitement de surface mécanique de la surface interne du logement du tambour, l'étape de traitement de surface mécanique de la surface interne du logement du tambour étant une étape de génération de stries sur la surface interne du logement.

Ainsi, la surface interne du logement du tambour comporte des stries obtenues par un traitement de surface mécanique, de sorte à améliorer le guidage d'un lubrifiant, à optimiser la lubrification des zones de contact entre le ressort hélicoïdal et le tambour et à réduire les bruits de fonctionnement du frein à ressort.

De cette manière, la surface interne du logement du tambour présente une texturation spécifique de la surface avec laquelle au moins une spire du ressort hélicoïdal est en contact.

En outre, le traitement de surface mécanique de la surface interne du logement du tambour permet de déterminer avec précision des paramètres de rugosité de la surface interne du logement du tambour, de sorte à garantir le maintien du lubrifiant entre le ressort hélicoïdal et la surface interne du logement du tambour.

Par conséquent, le traitement de surface mécanique de la surface interne du logement du tambour permet de garantir la lubrification entre le ressort hélicoïdal et le tambour et de maîtriser l'interface de contact entre au moins une spire du ressort hélicoïdal et la surface interne du logement du tambour.

De nombreuses modifications peuvent être apportées aux exemples de réalisation décrits précédemment sans sortir du cadre de l'invention défini par les revendications.

En outre, les modes de réalisation et variantes envisagés peuvent être combinés pour générer de nouveaux modes de réalisation de l'invention, sans sortir du cadre de l'invention défini par les revendications.

## Revendications

1. Procédé de fabrication d'un tambour (23) d'un frein à ressort (15) d'un actionneur électromécanique (11), le tambour (23) comprenant un logement (26), le logement (26) étant configuré pour loger au moins un ressort hélicoïdal (22), un organe d'entrée (24) et un organe de sortie (25), le logement (26) présentant une surface interne de frottement (27) configurée pour coopérer avec au moins une spire du ressort hélicoïdal (22), **caractérisé en ce que** le procédé comprend au moins une étape de traitement de surface mécanique de la surface interne (27) du logement (26) du tambour (23), l'étape de traitement de surface mécanique de la surface interne (27) du logement (26) du tambour (23) étant une étape de génération de stries (50a, 50b) sur la surface interne (27) du logement (26).

2. Procédé de fabrication d'un tambour (23) d'un frein à ressort (15) d'un actionneur électromécanique (11) selon la revendication 1, **caractérisé en ce que** chaque strie (50a, 50b) ménagée au niveau de la surface interne (27) du logement (26) du tambour (23) est orientée d'un angle prédéterminé (α1, α2) par rapport à un axe de rotation (X23) du tambour (23).

3. Procédé de fabrication d'un tambour (23) d'un frein à ressort (15) d'un actionneur électromécanique (11) selon la revendication 2, **caractérisé en ce que** l'étape de traitement de surface mécanique de la surface interne (27) du logement (26) consiste à générer une première série de stries (50a) et une deuxième série de stries (50b) sur la surface interne (27) du logement (26), **en ce que** les stries (50a) de la première série sont croisées par rapport aux stries (50b) de la deuxième série, **en ce que** les stries (50a) de la première série sont orientées d'un premier angle prédéterminé (α1) par rapport à l'axe de rotation (X23) du tambour (23) et **en ce que** les stries (50b) de la deuxième série sont orientées d'un deuxième angle prédéterminé (α2) par rapport à l'axe de rotation (X23) du tambour (23).

4. Procédé de fabrication d'un tambour (23) d'un frein à ressort (15) d'un actionneur électromécanique (11) selon la revendication 3, **caractérisé en ce que** le premier angle (α1) d'orientation et le deuxième angle (α2) d'orientation, respectivement, des stries (50a) de la première série et des stries (50b) de la deuxième série, par rapport à l'axe de rotation (X23) du tambour (23), sont compris dans une plage s'étendant entre 45° et 85° et préférentiellement de l'ordre de 80°.

5. Procédé de fabrication d'un tambour (23) d'un frein à ressort (15) d'un actionneur électromécanique (11) selon l'une quelconque des revendications 1 à 4, **caractérisé en ce que**, suite à l'étape de traitement de surface mécanique, le procédé comprend une étape de traitement de surface thermochimique du tambour (23).

6. Procédé de fabrication d'un tambour (23) d'un frein à ressort (15) d'un actionneur électromécanique (11) selon la revendication 5, **caractérisé en ce que**, suite à l'étape de traitement de surface thermochimique, le procédé comprend une étape d'application d'un lubrifiant solide sur la surface interne (27) du logement (26) du tambour (23).

7. Procédé de fabrication d'un tambour (23) d'un frein à ressort (15) d'un actionneur électromécanique (11) selon la revendication 6, **caractérisé en ce que** l'étape d'application du lubrifiant solide est mise en œuvre par projection du lubrifiant sous forme de poudre sur la surface interne (27) du logement (26) du tambour (23).

8. Procédé de fabrication d'un frein à ressort (15) d'un actionneur électromécanique (11), le frein à ressort (15) comprenant :
- un ressort hélicoïdal (22),
- un tambour (23) obtenu selon le procédé de fabrication conforme à l'une quelconque des revendications 1 à 7,
▪ où le tambour (23) comporte un logement (26), et
▪ où une surface interne de frottement (27) du logement (26) du tambour (23) est configurée pour coopérer avec au moins une spire du ressort hélicoïdal (22),
- un organe d'entrée (24), et
- un organe de sortie (25),
**caractérisé en ce que** le procédé comprend au moins une étape d'assemblage du ressort hélicoïdal (22), de l'organe d'entrée (24) et de l'organe de sortie (25) à l'intérieur du logement (26) du tambour (23).

9. Actionneur électromécanique (11) pour une installation domotique de fermeture ou de protection solaire comprenant un moteur électrique (12), un réducteur (14), un frein à ressort (15) obtenu selon le procédé de fabrication conforme à la revendication 8, le frein à ressort (15) comprenant :
- un ressort hélicoïdal (22),
- un tambour (23),
▪ où le tambour (23) comporte un logement (26), et
▪ où une surface interne de frottement (27) du logement (26) du tambour (23) est configurée pour coopérer avec au moins une spire du ressort hélicoïdal (22),
- un organe d'entrée (24), et
- un organe de sortie (25),
**caractérisé en ce que** la surface interne (27) du logement (26) du tambour (23) comporte des stries (50a, 50b).

10. Installation domotique de fermeture ou de protection solaire comprenant un écran (2) enroulable sur un tube d'enroulement (4) entraîné en rotation par un actionneur électromécanique (11), **caractérisée en ce que** l'actionneur électromécanique (11) est conforme à la revendication 9.

## Patentansprüche

1. Verfahren zur Herstellung einer Trommel (23) einer Federbremse (15) für einen elektromechanischen Aktuator (11), wobei die Trommel (23) eine Aufnahme (26) umfasst, wobei die Aufnahme (26) für das Aufnehmen von wenigstens einer Schraubenfeder (22), einem Eintrittsorgan (24) und einem Austrittsorgan (25) ausgebildet ist, wobei die Aufnahme (26) eine Reibungsinnenfläche (27) aufweist, die für das Zusammenwirken mit wenigstens einer Windung der Schraubenfeder (22) ausgebildet ist, **dadurch gekennzeichnet, dass** das Verfahren wenigstens einen Schritt der mechanischen Oberflächenbehandlung der Innenfläche (27) der Aufnahme (26) der Trommel (23) umfasst, wobei der Schritt der mechanischen Oberflächenbehandlung der Innenfläche (27) der Aufnahme (26) der Trommel (23) ein Schritt der Erzeugung von Rillen (50a, 50b) auf der Innenfläche (27) der Aufnahme (26) ist.

2. Verfahren zur Herstellung einer Trommel (23) einer Federbremse (15) für einen elektromechanischen Aktuator (11) nach Anspruch 1, **dadurch gekennzeichnet, dass** jede Rille (50a, 50b), die im Bereich der Innenfläche (27) der Aufnahme (26) der Trommel (23) vorgesehen ist, in einem vorher bestimmten Winkel (α1, α2) relativ zu einer Rotationsachse (X23) der Trommel (23) orientiert ist.

3. Verfahren zur Herstellung einer Trommel (23) einer Federbremse (15) eines elektromechanischen Aktuators (11) nach Anspruch 2, **dadurch gekennzeichnet, dass** der Schritt der mechanischen Oberflächenbehandlung der Innenfläche (27) der Aufnahme (26) darin besteht, eine erste Reihe von Rillen (50a) und eine zweite Reihe von Rillen (50b) auf der Innenfläche (27) der Aufnahme (26) zu erzeugen, dadurch, dass die Rillen (50a) der ersten Reihe relativ zu den Rillen (50b) der zweiten Reihe gekreuzt sind, dadurch, dass die Rillen (50a) der ersten Reihe in einem vorher bestimmten ersten Winkel (α1) relativ zu der Rotationsachse (X23) der Trommel (23) orientiert sind, und dadurch, dass die Rillen (50b) der zweiten Reihe in einem vorher bestimmten zweiten Winkel (α2) relativ zu der Rotationsachse (X23) der Trommel (23) orientiert sind.

4. Verfahren zur Herstellung einer Trommel (23) einer Federbremse (15) für einen elektromechanischen Aktuator (11) nach Anspruch 3, **dadurch gekennzeichnet, dass** der erste Orientierungswinkel (α1) und der zweite Orientierungswinkel (α2) der Rillen (50a) der ersten Reihe bzw. der Rillen (50b) der zweiten Reihe, relativ zu der Rotationsachse (X23) der Trommel (23), in einem Bereich liegen, der sich 45° und 85° erstreckt, und vorzugsweise in der Größenordnung von 80° liegen.

5. Verfahren zur Herstellung einer Trommel (23) einer Federbremse (15) für einen elektromechanischen Aktuator (11) nach einem der Ansprüche 1 bis 4, **dadurch gekennzeichnet, dass**, nach dem Schritt der mechanischen Oberflächenbehandlung, das Verfahren einen Schritt der thermochemischen Oberflächenbehandlung der Trommel (23) umfasst.

6. Verfahren zur Herstellung einer Trommel (23) einer Federbremse (15) für einen elektromechanischen Aktuator (11) nach Anspruch 5, **dadurch gekennzeichnet, dass**, nach dem Schritt der thermochemischen Oberflächenbehandlung, das Verfahren einen Schritt der Aufbringung eines Festschmierstoffs auf die Innenfläche (27) der Aufnahme (26) der Trommel (23) umfasst.

7. Verfahren zur Herstellung einer Trommel (23) einer Federbremse (15) eines elektromechanischen Aktuators (11) nach Anspruch 6, **dadurch gekennzeichnet, dass** der Schritt der Aufbringung eines Festschmierstoffs durch Aufsprühen des pulverförmigen Schmierstoffs auf die Innenfläche (27) der Aufnahme (26) der Trommel (23) durchgeführt wird.

8. Verfahren zur Herstellung einer Federbremse (15) für einen elektromechanischen Aktuator (11), wobei die Federbremse (15) umfasst:
- eine Schraubenfeder (22),
- eine Trommel (23), die nach dem Herstellungsverfahren gemäß einem der Ansprüche 1 bis 7 hergestellt ist,
▪ wobei die Trommel (23) eine Aufnahme (26) aufweist, und
▪ wobei eine Reibungsinnenfläche (27) der Aufnahme (26) der Trommel (23) für das Zusammenwirken mit wenigstens einer Windung der Schraubenfeder (22) ausgebildet ist,
- ein Eintrittsorgan (24) und
- ein Austrittsorgan (25),
**dadurch gekennzeichnet, dass** das Verfahren wenigstens einen Schritt der Montage der Schraubenfeder (22), des Eintrittsorgans (24) und des Austrittsorgans (25) im Inneren der Aufnahme (26) der Trommel (23) umfasst.

9. Elektromechanischer Aktuator (11) für eine domotische Schließ- oder Sonnenschutzanlage, umfassend einen Elektromotor (12), ein Getriebe (14), eine Federbremse (15), die nach dem Herstellungsverfahren gemäß Anspruch 8 hergestellt ist, wobei die Federbremse (15) umfasst:
- eine Schraubenfeder (22),
- eine Trommel (23),
▪ wobei die Trommel (23) eine Aufnahme (26) aufweist, und
▪ wobei eine Reibungsinnenfläche (27) der Aufnahme (26) der Trommel (23) für das Zusammenwirken mit wenigstens einer Windung der Schraubenfeder (22) ausgebildet ist,
- ein Eintrittsorgan (24) und
- ein Austrittsorgan (25),
**dadurch gekennzeichnet, dass** die Innenfläche (27) der Aufnahme (26) der Trommel (23) Rillen (50a, 50b) aufweist.

10. Domotische Schließ- oder Sonnenschutzanlage, umfassend eine Blende (2), die auf ein durch einen elektromechanischen Aktuator (11) angetriebenes Wickelrohr (4) wickelbar ist, **dadurch gekennzeichnet, dass** der elektromechanische Aktuator (11) gemäß Anspruch 9 ausgebildet ist.

## Claims

1. A method for manufacturing a drum (23) of a spring brake (15) of an electromechanical actuator (11), the drum (23) comprising a housing (26), the housing (26) being configured to house at least one helical spring (22), an input member (24) and an output member (25), the housing (26) having an inner friction surface (27) configured to cooperate with at least one turn of the helical spring (22), **characterized in that** the method comprises at least one mechanical surface treatment step of the inner surface (27) of the housing (26) of the drum (23), the mechanical surface treatment step of the inner surface (27) of the housing (26) of the drum (23) being a step for generating furrows (50a, 50b) on the inner surface (27) of the housing (26).

2. The method for manufacturing a drum (23) of a spring brake (15) of an electromechanical actuator (11) according to claim 1, **characterized in that** each furrow (50a, 50b) arranged at the inner surface (27) of the housing (26) of the drum (23) is oriented by a predetermined angle (α1, α2) relative to a rotation axis (X23) of the drum (23).

3. The method for manufacturing a drum (23) of a spring brake (15) of an electromechanical actuator (11) according to claim 2, **characterized in that** the mechanical surface treatment step of the inner surface (27) of the housing (26) consists of generating a first series of furrows (50a) and a second series of furrows (50b) on the inner surface (27) of the housing (26), **in that** the furrows (50a) of the first series are crossed relative to the furrows (50b) of the second series, **in that** the furrows (50a) of the first series are oriented by a first predetermined angle (α1) relative to the rotation axis (X23) of the drum (23) and **in that** the furrows (50b) of the second series are oriented by a second predetermined angle (α2) relative to the rotation axis (X23) of the drum (23).

4. The method for manufacturing a drum (23) of a spring brake (15) of an electromechanical actuator (11) according to claim 3, **characterized in that** the first orientation angle (α1) and the second orientation angle (α2), respectively, of the furrows (50a) of the first series and the furrows (50b) of the second series, relative to the rotation axis (X23) of the drum (23), are comprised in a range extending between 45° and 85° and preferably of about 80°.

5. The method for manufacturing a drum (23) of a spring brake (15) of an electromechanical actuator (11) according to any one of claims 1 to 4, **characterized in that**, following the mechanical surface treatment step, the method comprises a thermochemical surface treatment step of the drum (23).

6. The method for manufacturing a drum (23) of a spring brake (15) of an electromechanical actuator (11) according to claim 5, **characterized in that**, following the thermochemical surface treatment step, the method comprises a step for applying a solid lubricant on the inner surface (27) of the housing (26) of the drum (23).

7. The method for manufacturing a drum (23) of a spring brake (15) of an electromechanical actuator (11) according to claim 6, **characterized in that** the step for applying solid lubricant is carried out by spraying lubricant in powder form on the inner surface (27) of the housing (26) of the drum (23).

8. A method for manufacturing a spring brake (15) of an electromechanical actuator (11), the spring brake (15) comprising:
- a helical spring (22),
- a drum (23) obtained according to the manufacturing method according to any one of claims 1 to 7,
▪ where the drum (23) comprises a housing (26), and
▪ where an inner friction surface (27) of the housing (26) of the drum (23) is configured to cooperate with at least one turn of the helical spring (22),
- an input member (24), and
- an output member (25),
**characterized in that** the method comprises at least one step for assembling the helical spring (22), the input member (24) and the output member (25) to the inside of the housing (26) of the drum (23).

9. An electromechanical actuator (11) for a home automation installation for closing or providing sun protection comprising an electric motor (12), a reduction gear (14), a spring brake (15) obtained according to the manufacturing method according to claim 8, the spring brake (15) comprising:
- a helical spring (22),
- a drum (23),
▪ where the drum (23) comprises a housing (26), and
▪ where an inner friction surface (27) of the housing (26) of the drum (23) is configured to cooperate with at least one turn of the helical spring (22),
- an input member (24), and
- an output member (25),
**characterized in that** the inner surface (27) of the housing (26) of the drum (23) includes furrows (50a, 50b).

10. A home automation installation for closing or providing sun protection that comprises a screen (2) able to be wound on a winding tube (4) rotated by an electromechanical actuator (11), **characterized in that** the electromechanical actuator (11) is according to claim 9.
